# EUROPEAN PATENT APPLICATION

(11) **EP 4 212 383 A1**
(43) Date of publication of application: **19.07.2023**
(21) Application number: 20953111.0
(22) Date of filing: 27.11.2020
(51) Int. Cl.: B60L 58/10, H01M 10/44, H02J 7/00

(54) **RAIL TRANSIT VEHICLE AND POWER STORAGE BATTERY DISCHARGE BALANCING CIRCUIT THEREOF, AND CONTROL METHOD**

(30) Priority: 11.09.2020 CN 202010952357
(71) Applicant: CRRC Zhuzhou Locomotive Co., Ltd., Zhuzhou, Hunan 412001 (CN)
(72) Inventor: LIAO, Hongtao, Zhuzhou, Hunan 412001 (CN); WANG, Wei, Zhuzhou, Hunan 412001 (CN); WAN, Shangcun, Zhuzhou, Hunan 412001 (CN); TAN, Benxu, Zhuzhou, Hunan 412001 (CN); WU, Zhenshu, Zhuzhou, Hunan 412001 (CN); PI, Kaijun, Zhuzhou, Hunan 412001 (CN)
(74) Representative: Ran, Handong
(86) International application number: PCT/CN2020/132321
(87) International publication number: WO 2022/052326

(57) **Abstract**

A rail transit vehicle and a power storage battery discharge balancing circuit thereof, and a control method. A power supply configuration relationship between two groups of traction storage batteries and a VVVF auxiliary load and a CVCF auxiliary load of two groups of auxiliary converters is adjusted by controlling actions of four switching modules. When a locomotive operates normally, the total discharge capacity of each traction storage battery pack to the VVVF auxiliary load and the CVCF auxiliary load by default within two discharge cycle periods is the depth of one discharge cycle; when the locomotive is in deep endurance, the traction storage battery having high power consumption automatically selects to supply power to the auxiliary converter having a lower auxiliary load, thereby improving the endurance of the locomotive, and prolonging the service life of the traction storage batteries.

## Description

### FIELD OF THE INVENTION

The present invention belongs to the technical field of rail transit, in particular to a rail transit vehicle and a power storage battery discharge balancing circuit thereof, and a control method.

### BACKGROUND OF THE INVENTION

Lithium batteries can meet the requirements of vehicle endurance because of their high energy density, and have been widely used in the field of electric locomotives as traction storage batteries (or power storage batteries). According to the structural characteristics that main and auxiliary circuits of a locomotive are composed of two traction converters and two auxiliary converters, the whole battery pack is generally divided into two completely independent traction storage battery units to supply power to the two traction converters and two auxiliary converters of the locomotive respectively, in order to improve the application safety of lithium batteries, strengthen the accurate monitoring of voltage, current, capacity and other parameters of a lithium battery pack, and at the same time, reduce the influence of a faulty battery on a whole vehicle. The two traction converters respectively drive one and the other half of traction motors of the locomotive, and the two auxiliary converters supply power to VVVF (Variable Voltage and Variable Frequency) auxiliary loads (auxiliary loads that need variable voltage and variable frequency control, such as a cooling tower fan and a traction cooling fan) and CVCF (Constant Voltage and Constant Frequency) auxiliary loads (auxiliary loads that need constant voltage and constant frequency control, such as a main compressor, a control storage battery charger, an air conditioner, and a water pump) of the locomotive respectively.

In practical application, the total power of the VVVF auxiliary loads and the total power of the CVCF auxiliary loads of the locomotive are different, resulting in unbalanced discharge of the two storage battery units. After long-time use, the service life of the storage battery unit with higher power consumption is obviously shorter than that of the other storage battery unit, because the discharge depth of the former is greater than that of the latter each time (note: the power of the VVVF auxiliary loads of the locomotive is generally lower than that of the CVCF loads of the locomotive).

In the prior art, the first traction storage battery unit and the second traction storage battery unit of a locomotive are two completely independent traction storage battery units, and respectively supply power to two different traction converters and respectively supply power to two different auxiliary converters. The first traction converter and the second traction converter supply power to one and the other half of traction motors of the locomotive respectively, and the output power of the first traction converter and the output power second traction converter are equal under normal circumstances. The first auxiliary converter and the second auxiliary converter supply power to VVVF auxiliary loads and CVCF auxiliary loads of the locomotive respectively, and the total power of the VVVF auxiliary loads is lower than that of the CVCF auxiliary loads under normal circumstances, so the discharge depth of the second traction storage battery unit is higher and the discharge depth of the first traction storage battery unit is lower, resulting in unbalanced discharge between them.

If the discharge depth of a storage battery is relative high (discharge high electricity), the storage battery with high power consumption is prone to cause corresponding traction converter to be blocked in advance due to excessive low electric quantity, such that the locomotive loses half of its traction performance. In severe cases, the corresponding auxiliary converter is also disabled. Then, in order to ensure the normal operation of the locomotive, the VVVF auxiliary loads generally run in a CVCF mode and are supplied with power by the other auxiliary converter (a VVVF auxiliary load and a CVCF auxiliary load are connected by a contactor), that is, the same storage battery and the same auxiliary converter supply power to the VVVF auxiliary load and the CVCF auxiliary load at the same time. When the VVVF auxiliary loads run in the CVCF mode, due to the increase of working voltage and working frequency, this mode will increase not only the noise of the VVVF auxiliary loads but also the output power of the VVVF auxiliary loads, thus further affecting the endurance of storage batteries.

### SUMMARY OF THE INVENTION

Aiming at the deficiencies of the prior art, the present invention provides a rail transit vehicle and a power storage battery discharge balancing circuit thereof, and a control method, so as to solve the problem of unbalanced discharge of two traction storage battery units due to difference between the total power of VVVF auxiliary loads and the total power of CVCF auxiliary loads.

The present invention solves the above technical problem through the following technical solution: a power storage battery discharge balancing circuit of a rail transit vehicle includes a first traction storage battery unit, a first traction converter connected to the first traction storage battery unit, a second traction storage battery unit, a second traction converter connected to the second traction storage battery unit, a first traction converter, a second traction converter, a first auxiliary converter, a VVVF auxiliary load connected to the first auxiliary converter, a second auxiliary converter, and a CVCF auxiliary load connected to the second auxiliary converter; the first traction storage battery unit is connected to the first auxiliary converter by a first switching module, and the first traction storage battery unit is connected to the second auxiliary inverter by a second switching module; the second traction storage battery unit is connected to the second auxiliary inverter by a third switching module, and the second traction storage battery unit is connected to the first auxiliary inverter by a fourth switching module.

In the traction storage battery discharge balancing circuit, each traction storage battery unit is connected to the first auxiliary converter and the second auxiliary converter by two switching modules respectively, and the first auxiliary converter and the second auxiliary converter provide energy for the VVVF auxiliary load and the CVCF auxiliary load respectively. By controlling actions of the four switching modules, when the number of discharge cycles of the two traction storage battery units is odd or even, the total discharge amount that each traction storage battery unit discharges to the VVVF auxiliary load and the CVCF auxiliary load by default is the depth of one discharge cycle within two discharge cycle periods, such that the total discharge amount of the two traction storage battery units are basically consistent in the whole life cycle, which prolongs the service lives of the traction storage batteries. When a locomotive needs long endurance, the locomotive automatically selects a traction storage battery unit with higher discharge depth to provide energy for the VVVF auxiliary load, while the traction storage battery unit with lower discharge depth provides energy for the CVCF auxiliary load, which prevents the traction storage battery unit with higher auxiliary load power from being blocked in advance due to excessive discharge, improves the endurance of the locomotive, and at the same time, prevents an auxiliary converter from providing energy for the VVVF auxiliary load and the CVCF auxiliary load simultaneously, thereby solves the problems of loud noise and increased output power caused by the VVVF auxiliary load which runs in a CVCF mode.

Further, in order to facilitate control and reduce cost, the first switching module, the second switching module, the third switching module and the fourth switching module are all contactors.

Correspondingly, the present invention further provides a rail transit vehicle, which adopts the above-mentioned discharge balancing circuit. The closing and opening of the first switching module, the second switching module, the third switching module and the fourth switching module of the power storage battery discharge balancing circuit is controlled by a control system.

For the convenience of controlling and cost saving, the closing and opening of the first switching module, the second switching module, the third switching module and the fourth switching module in the present invention are controlled by a TCMS system (train control and management system).

The present invention further provides a control method for the discharge balance of power storage batteries of the above-mentioned rail transit vehicle, including:
when the discharge balancing circuit is powered on each time, acquiring and determining the number of discharge cycles of the first traction storage battery unit or the second traction storage battery unit; if the number of discharge cycles is odd, controlling the first switching module and the third switching module to close, and controlling the second switching module and the fourth switching module to open, such that the first traction storage battery unit provides energy for the first auxiliary converter, and the second traction storage battery unit provides energy for the second auxiliary converter; or, controlling the second switching module and the fourth switching module to close, and controlling the first switching module and the third switching module to open, such that the first traction storage battery unit provides energy for the second auxiliary converter, and the second traction storage battery unit provides energy for the first auxiliary converter; and
if the number of discharge cycles is even, controlling the second switching module and the fourth switching module to close, and controlling the first switching module and the third switching module to open, such that the first traction storage battery unit provides energy for the second auxiliary converter, and the second traction storage battery unit provides energy for the first auxiliary converter; or, controlling the first switching module and the third switching module to close, and controlling the second switching module and the fourth switching module to open, such that the first traction storage battery unit provides energy for the first auxiliary converter, and the second traction storage battery unit provides energy for the second auxiliary converter.

Each time the accumulated discharge amount of the first traction storage battery unit or the second traction storage battery unit reaches the first set electric quantity, increasing the number of discharge cycles by 1. Since the first traction storage battery unit and the second traction storage battery unit are put into use, the number of discharge cycles is not cleared.

According to the control method of the power storage battery discharge balancing circuit in the present invention, the total power of the CVCF auxiliary load is greater than that of the VVVF auxiliary load under normal circumstances. Therefore, the traction storage battery unit providing electric energy for the CVCF auxiliary load has a higher discharge depth, that is, a large discharge amount, while the traction storage battery unit providing electric energy for the VVVF auxiliary load has a lower discharge depth, that is, a small discharge amount. The number of discharge cycles of the traction storage batteries is detected at each time of power-on, and the closing and opening of the first switching module, the second switching module, the third switching module and the fourth switching module are controlled according to the odd or even number of discharge cycles, such that the discharge amount of the first traction storage battery unit and the second traction storage battery unit are balanced within two discharge cycle periods, which prolongs the average service life of the two traction storage battery units.

Further, after the first switching module and the third switching module are closed and the second switching module and the fourth switching module are open, the method further includes: determining whether the remaining electric quantity of the second traction storage battery unit is lower than the second set electric quantity, and determining whether the difference between the remaining electric quantity of the first traction storage battery unit and the remaining electric quantity of the second traction storage battery unit is less than the third set electric quantity; and
if the remaining electric quantity of the second traction storage battery unit is lower than the second set electric quantity, while the difference between the remaining electric quantity of the first traction storage battery unit and the remaining electric quantity of the second traction storage battery unit is greater than the third set electric quantity, controlling the second switching module and the fourth switching module to close, and controlling the first switching module and the third switching module to open, such that the first traction storage battery unit provides energy for the second auxiliary converter, and the second traction storage battery unit provides energy for the first auxiliary converter; otherwise, keeping the first switching module and the third switching module closed, and keeping the second switching module and the fourth switching module open.

The solution of the present invention avoids the risk that the second traction storage battery unit enters a status of insufficient electric quantity in advance (when the first switching module and the third switching module are closed, the first traction storage battery unit supplies power to the VVVF load, and the second traction storage battery unit supplies power to the CVCF load, and the CVCF load is greater than the VVVF load, so that second traction storage battery unit would have a risk of entering a status of insufficient electric quantity in advance), and improves the endurance of the locomotive.

Further, after the first switching module and the third switching module are closed and the second switching module and the fourth switching module are open, and before determining whether the remaining electric quantity of the second traction storage battery unit is lower than the second set electric quantity, and before determining whether the difference between the remaining electric quantity of the first traction storage battery unit and the remaining electric quantity of the second traction storage battery unit is lower than the third set electric quantity, the method further includes a step of determining whether the electric quantity of the traction storage battery unit is insufficient which is specifically as follows:
determining whether the electric quantity of the first traction storage battery unit and the electric quantity of the second traction storage battery unit are insufficient;
if both the first traction storage battery unit and the second traction storage battery unit are normal, determining whether the remaining electric quantity of the second traction storage battery unit is lower than the second set electric quantity, and determining whether the difference between the remaining electric quantity of the first traction storage battery unit and the remaining electric quantity of the second traction storage battery unit is lower than the third set electric quantity;
if the first traction storage battery unit is normal and the electric quantity of the second traction storage battery unit is insufficient, controlling the first switching module and the second switching module to close, and controlling the third switching module and the fourth switching module to open, such that the first traction storage battery unit provides energy for the first auxiliary converter and the second auxiliary converter;
if the electric quantity of the first traction storage battery unit is insufficient and the second traction storage battery unit is normal, controlling the third switching module and the fourth switching module to close, and controlling the first switching module and the second switching module to open, such that the second traction storage battery unit provides energy for the first auxiliary converter and the second auxiliary converter;
if both the electric quantity of the first traction storage battery unit and the electric quantity of the second traction storage battery unit are insufficient, controlling the first switching module, the second switching module, the third switching module and the fourth switching module to open to stop the first and second traction storage batteries from providing energy for the first auxiliary converter and the second auxiliary converter.

Further, after the second switching module and the fourth switching module are closed and the first switching module and the third switching module are open, the method further includes: determining whether the remaining electric quantity of the first traction storage battery unit is lower than the second set electric quantity, and determining whether the difference between the remaining electric quantity of the second traction storage battery unit and the remaining electric quantity of the first traction storage battery unit is lower than the third set electric quantity; and
if the remaining electric quantity of the first traction storage battery unit is lower than the second set electric quantity, and the difference between the remaining electric quantity of the second traction storage battery unit and the remaining electric quantity of the first traction storage battery unit is greater than the third set electric quantity, controlling the first switching module and the third switching module to close, and controlling the second switching module and the fourth switching module to open, such that the first traction storage battery unit provides energy for the first auxiliary converter, and the second traction storage battery unit provides energy for the second auxiliary converter; otherwise, keeping the second switching module and the fourth switching module closed, and keeping the first switching module and the third switching module open.

The solution of the present invention avoids the risk that the first traction storage battery unit enters a status of insufficient electric quantity in advance (when the second switching module and the fourth switching module are closed, the second traction storage battery unit supplies power to the VVVF load, and the first traction storage battery unit supplies power to the CVCF load, and the CVCF load is greater than the VVVF load, so that the first traction storage battery unit would have a risk of entering a status of insufficient electric quantity in advance), and improves the endurance of the locomotive.

Further, after the second switching module and the fourth switching module are closed and the first switching module and the third switching module are open, before determining whether the remaining electric quantity of the first traction storage battery unit is lower than the second set electric quantity, and before determining whether the difference between the remaining electric quantity of the second traction storage battery unit and the remaining electric quantity of the first traction storage battery unit is lower than the third set electric quantity, the method further includes a step of determining whether the electric quantity of the traction storage battery unit is insufficient, which is specifically as follows:
determining whether the electric quantity of the first traction storage battery unit and the electric quantity of the second traction storage battery unit are insufficient;
if both the first traction storage battery unit and the second traction storage battery unit are normal, determining whether the remaining electric quantity of the first traction storage battery unit is lower than the second set electric quantity, and determining whether the difference between the remaining electric quantity of the second traction storage battery unit and the remaining electric quantity of the first traction storage battery unit is lower than the third set electric quantity;
if the first traction storage battery unit is normal and the electric quantity of the second traction storage battery unit is insufficient, controlling the first switching module and the second switching module to close, and controlling the third switching module and the fourth switching module to open, such that the first traction storage battery unit provides energy for the first auxiliary converter and the second auxiliary converter;
if the electric quantity of the first traction storage battery unit is insufficient and the second traction storage battery unit is normal, controlling the third switching module and the fourth switching module to close, and controlling the first switching module and the second switching module to open, such that the second traction storage battery unit provides energy for the first auxiliary converter and the second auxiliary converter; and
if both the electric quantity of the first traction storage battery unit and the electric quantity of the second traction storage battery unit are insufficient, controlling the first switching module, the second switching module, the third switching module and the fourth switching module to open to stop the first and second traction storage batteries from providing energy for the first auxiliary converter and the second auxiliary converter.

Further, before acquiring and determining the number of discharge cycles of the first traction storage battery unit or the second traction storage battery unit, the method further includes a step of determining whether the electric quantity of the traction storage battery unit is sufficient, which is specifically as follows:
determining whether the electric quantity of the first traction storage battery unit and the electric quantity of the second traction storage battery unit are insufficient;
if both the first traction storage battery unit and the second traction storage battery unit are normal, acquiring and determining the number of discharge cycles of the first traction storage battery unit or the second traction storage battery unit;
if the first traction storage battery unit is normal and the electric quantity of the second traction storage battery unit is insufficient, controlling the first switching module and the second switching module to close, and controlling the third switching module and the fourth switching module to open, such that the first traction storage battery unit provides energy for the first auxiliary converter and the second auxiliary converter;
if the electric quantity of the first traction storage battery unit is insufficient and the second traction storage battery unit is normal, controlling the third switching module and the fourth switching module to close, and controlling the first switching module and the second switching module to open, such that the second traction storage battery unit provides energy for the first auxiliary converter and the second auxiliary converter; and
if both the electric quantity of the first traction storage battery unit and the electric quantity of the second traction storage battery unit are insufficient, controlling the first switching module, the second switching module, the third switching module and the fourth switching module to open to stop the first and second traction storage batteries from providing energy for the first auxiliary converter and the second auxiliary converter.

The determination on the electric quantity of the traction storage battery unit (power storage battery unit) can prevent excessive discharge of the traction storage batteries. When the electric quantity of one traction storage battery unit is insufficient, the other traction storage battery unit can provide energy for both the VVVF auxiliary load and the CVCF auxiliary load at the same time. The first auxiliary converter and the second auxiliary converter provide energy for the VVVF auxiliary load and the CVCF auxiliary load respectively, so that one auxiliary converter is prevented from providing energy for the VVVF auxiliary load and the CVCF auxiliary load at the same time, thereby solving the problems of loud noise and increased output power caused by the VVVF auxiliary load which runs in a CVCF mode.

Further, the first set electric quantity is the total electric quantity of the first traction storage battery unit or the second traction storage battery unit; the second set electric quantity and the third set electric quantity shall satisfy the following relation: when a remaining electric quantity of any traction storage battery unit is equal to the second set electric quantity, the time for said traction storage battery unit to simultaneously discharge to one traction converter and the VVVF auxiliary load until its electric quantity reaches zero or almost zero, is equal to the time for the other traction storage battery unit to simultaneously discharge to the other traction converter and the CVCF auxiliary load until its electric quantity reaches zero or almost zero, when a remaining electric quantity of the other traction storage battery unit is equal to the sum of the second set electric quantity and the third set electric quantity, and the value of the second set electric quantity is minimum. The present invention can balance the discharge time of the traction storage batteries when the loads are unbalanced, and effectively improve the endurance of the locomotive. In this process, making the second set electric quantity value minimum can effectively reduce the unbalanced influence of the two storage batteries in the whole service life due to load switching during deep endurance.

Beneficial effects are as follows:
Compared with the prior art, each traction storage battery unit in the present invention is connected to the first auxiliary converter and the second auxiliary converter through two switching modules respectively, and the first auxiliary converter and the second auxiliary converter provide energy for the VVVF auxiliary load and the CVCF auxiliary load respectively. By controlling actions of the four switching modules, when the number of discharge cycles of the two traction storage battery units is odd or even, the total discharge amount that each traction storage battery unit discharges to the VVVF auxiliary load and the CVCF auxiliary load by default within two discharge cycle periods is the depth of one discharge cycle, such that the total discharge capacities of the two traction storage battery units are basically consistent in the whole life cycle, which ensures that the service lives of the two traction storage battery units are consistent. When a locomotive needs long endurance, the locomotive automatically selects a traction storage battery unit with higher discharge depth to provide energy for the VVVF auxiliary load, making the traction storage battery unit with lower discharge depth provide energy for the CVCF auxiliary load, which prevents the traction storage battery unit with higher auxiliary load power from being blocked in advance due to excessive discharge, improves the endurance of the locomotive, and at the same time, prevents one auxiliary converter from providing energy for the VVVF auxiliary load and the CVCF auxiliary load simultaneously, thereby solving the problems of loud noise and increased output power caused by the VVVF auxiliary load which runs in a CVCF mode.

### BRIEF DESCRIPTION OF THE DRAWINGS

In order to illustrate the technical solutions of the present invention more clearly, the following briefly introduces the accompanying drawings used in the description of the embodiments. Obviously, the drawings in the following description are only an embodiment of the present invention, and those of ordinary skill in the art can obtain other drawings according to the following drawings without any creative effort.
FIG. 1 is a structural schematic diagram of a discharge balancing circuit for a locomotive traction storage battery unit in Embodiment 1 of the present invention;
FIG. 2 is a flowchart of a control method for the discharge balancing circuit for the locomotive traction storage battery unit in Embodiment 1 of the present invention;
FIG. 3 is a flowchart of determining whether the electric quantity of the traction storage battery unit is insufficient or not in Embodiment 1 of the present invention; and
FIG. 4 is a flowchart of a control method for the discharge balancing circuit for the locomotive traction storage battery unit in Embodiment 2 of the present invention.

In the figures, the storage battery 1 is a first traction storage battery unit, and the storage battery 2 is a second traction storage battery unit.

### DETAILED DESCRIPTION OF THE EMBODIMENTS

A clear and complete description will be made to the technical solutions in the present invention below with reference to the accompanying drawings in the embodiments of the present invention. Apparently, the embodiments described are only part of the embodiments of the present invention, not all of them. All other embodiments obtained by those of ordinary skill in the art based on the embodiments of the present invention without any creative effort shall fall within the protection scope of the present invention.

### Embodiment 1

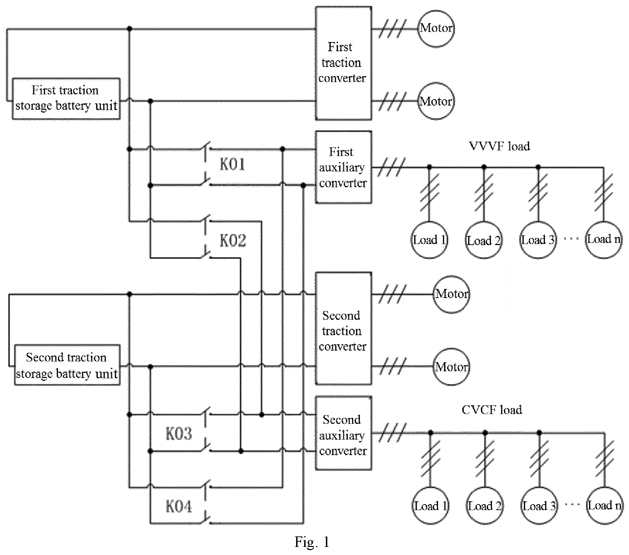

As shown in FIG. 1, a power storage battery discharge balancing circuit for a rail transit vehicle, provided by the present invention, includes a first traction storage battery unit, a second traction storage battery unit, a first traction converter, a second traction converter, a first auxiliary converter, a second auxiliary converter, a first switching module K01, a second switching module K02, a third switching module K03 and a fourth switching module K04; the first traction storage battery unit is connected to the first traction converter, the second traction storage battery unit is connected to the second traction converter, the first auxiliary converter is connected to a VVVF auxiliary load, and the second auxiliary converter is connected to a CVCF auxiliary load; the first traction storage battery unit is connected to the first auxiliary converter by the first switching module K01, and the first traction storage battery unit is connected to the second auxiliary inverter by the second switching module K02; the second traction storage battery unit is connected to the second auxiliary inverter by the third switching module K03, and the second traction storage battery unit is connected to the first auxiliary inverter by the fourth switching module K04; and the closing and opening of the first switching module K01, the second switching module K02, the third switching module K03 and the fourth switching module K04 are controlled by a TCMS system, which is a train control and management system.

In Embodiment 1 of the present invention, the first switching module K01, the second switching module K02, the third switching module K03 and the fourth switching module K04 are configured for the first auxiliary converter and the second auxiliary converter. The closing and opening of the switching modules are controlled under different conditions to realize the discharge balance of the two traction storage batteries. The specific control logic includes:
(1) When K01 and K03 are closed and K02 and K04 are open, the first traction storage battery unit supplies power to the first auxiliary converter, and the second traction storage battery unit supplies power to the second auxiliary converter;
(2) When K02 and K04 are closed and K01 and K03 are open, the first traction storage battery unit supplies power to the second auxiliary converter, and the second traction storage battery unit supplies power to the first auxiliary converter;
(3) When K01 and K02 are closed and K03 and K04 are open, the first traction storage battery unit supplies power to the first auxiliary converter and the second auxiliary converter at the same time;
(4) When K03 and K04 are closed and K01 and K02 are open, the second traction storage battery unit supplies power to the first auxiliary converter and the second auxiliary converter at the same time;
(5) When K01, K02, K03 and K04 are all open, the first traction storage battery unit and the second traction storage battery unit stop supplying power to the two auxiliary converters.

In this embodiment, the first switching module K01, the second switching module K02, the third switching module K03 and the fourth switching module K04 are all double-pole double-throw reversing contactors.

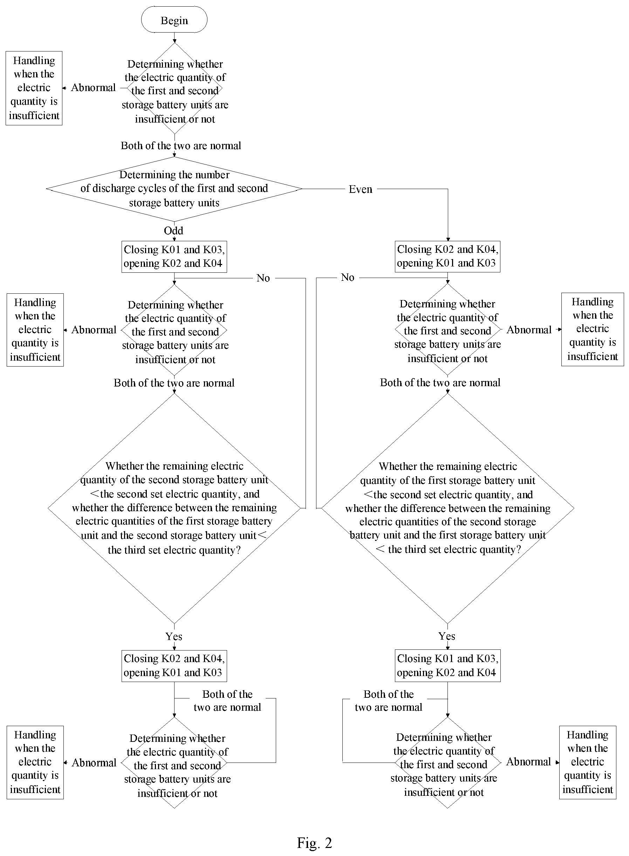

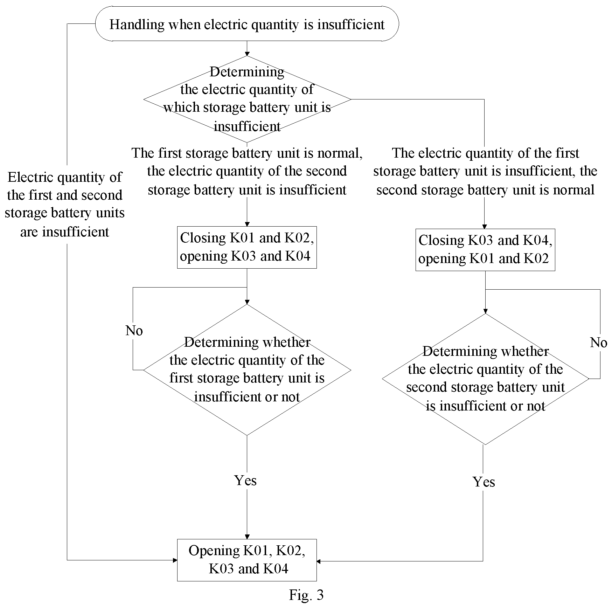

As shown in FIG. 2, the present invention further provides a control method for the discharge balance of power storage batteries of the rail transit vehicle, including:
(1) When the discharge balancing circuit is powered on each time, whether electric quantities of the first traction storage battery unit and the second traction storage battery unit are insufficient or not are determined; if both the first traction storage battery unit and the second traction storage battery unit are normal, step (2) is performed; otherwise:
   If the first traction storage battery unit is normal and the electric quantity of the second traction storage battery unit is insufficient, the first switching module K01 and the second switching module K02 are controlled to close, and the third switching module K03 and the fourth switching module K04 are controlled to open, such that the first traction storage battery unit provides energy for the first auxiliary converter and the second auxiliary converter;
   If the electric quantity of the first traction storage battery unit is insufficient and the second traction storage battery unit is normal, the third switching module K03 and the fourth switching module K04 are controlled to close, and the first switching module K01 and the second switching module K02 are controlled to open, such that the second traction storage battery unit provides energy for the first auxiliary converter and the second auxiliary converter;
   If both electric quantity of the first traction storage battery unit and electric quantity of the second traction storage battery unit are insufficient, the first switching module K01, the second switching module K02, the third switching module K03 and the fourth switching module K04 are controlled to open to stop the first and second traction storage batteries from providing energy for the first auxiliary converter and the second auxiliary converter, as shown in FIG. 3.
   Whether the electric quantity of traction storage battery unit is insufficient or not, is determined by the condition whether the remaining electric quantity of a traction storage battery unit is lower than a fourth set electric quantity, where
   the fourth set electric quantity < the third set electric quantity < the second set electric quantity < the first set electric quantity, and
   the fourth set electric quantity is a minimum remaining electric quantity. By comparing the remaining electric quantity of the traction storage battery unit with the minimum remaining power, the traction storage batteries are prevented from over-discharging. Even if the electric quantity of one traction storage battery unit is insufficient, the other traction storage battery unit can provide energy for both the VVVF auxiliary load and the CVCF auxiliary load at the same time. Because the first auxiliary converter and the second auxiliary converter provide energy for the VVVF auxiliary load and the CVCF auxiliary load respectively, one auxiliary converter is prevented from providing energy for the VVVF auxiliary load and the CVCF auxiliary load at the same time, thereby solving the problems of loud noise and increased output power caused by the VVVF auxiliary load which runs in a CVCF mode, and effectively improving the endurance of the traction storage batteries.
(2) When the discharge balancing circuit is powered on each time, the number of discharge cycles of the first traction storage battery unit or the second traction storage battery unit is acquired, and whether the discharge cycle is odd or even is determined, and if the number of discharge cycles is odd, step (3) is performed, otherwise, step (8) is performed.
   The number of discharge cycles of the traction storage batteries is detected at each time of power-on. After the discharge balancing circuit is powered on, determination of number of discharge cycles and switch of two traction storage batteries will not be triggered by the number of discharge cycles, and the number of discharge cycles of the traction storage batteries is detected at the next power-on. The closing and opening of the first switching module K01, the second switching module K02, the third switching module K03 and the fourth switching module K04 are controlled according to the (odd or even) number of discharge cycles, the discharge amounts of the first traction storage battery unit and the second traction storage battery unit are balanced within two discharge cycle periods, which avoids the traction converter with higher discharge depth from being blocked in advance, improves the endurance of the locomotive and prolongs the service lives of the traction storage batteries. For example, within a discharge cycle period (i.e., within a discharge cycle), if the number of discharge cycles is odd, the first traction storage battery unit supplies power to the VVVF auxiliary load (assuming that the power consumption is 40%), and the second traction storage battery unit supplies power to the CVCF auxiliary load (assuming that the power consumption is 60%); within the next discharge cycle period, if the number of discharge cycles is even, the first traction storage battery unit supplies power to the CVCF auxiliary load (the power consumption is 60%), and the second traction storage battery unit supplies power to the VVVF auxiliary load (the power consumption is 40%); accordingly, within the two discharge cycle periods, the power consumption of the first traction storage battery unit is 40%+60%, and the power consumption of the second traction storage battery unit is 60%+40%, such that the first traction storage battery unit and the second traction storage battery unit reach a discharge balance within the two discharge cycle periods. In this embodiment, the first set electric quantity is a total electric quantity of a traction storage battery unit. Each time the traction storage battery unit discharges a rated electric quantity, increasing the number of discharge cycles by 1. The traction storage battery unit may also be charged after or during discharging, if the traction storage batteries are switched according to the remaining electric quantity, the contactors may be switched frequently, thus resulting in poor stability of the locomotive. Therefore, the present invention switches the traction storage batteries according to the number of discharge cycles, thus ensuring the discharge balance of the first traction storage battery unit and the second traction storage battery unit within two discharge cycle periods.
(3) The first switching module K01 and the third switching module K03 are controlled to close, and the second switching module K02 and the fourth switching module K04 are controlled to open, such that the first traction storage battery unit provides energy for the first auxiliary converter, and the second traction storage battery unit provides energy for the second auxiliary converter.
   Within the current discharge cycle period (the number of discharge cycles is odd), the first traction storage battery unit provides energy for the first auxiliary converter, and the second traction storage battery unit provides energy for the second auxiliary converter; and within the next discharge cycle period (the number of discharge cycles is even), the first traction storage battery unit provides energy for the second auxiliary converter, and the second traction storage battery unit provides energy for the first auxiliary converter, such that the discharge amounts of the first traction storage battery unit and the second traction storage battery unit are balanced within the two discharge cycle periods.
(4) Whether the electric quantity of the first traction storage battery unit and the electric quantity of the second traction storage battery unit are insufficient are determined; if both the first traction storage battery unit and the second traction storage battery unit are normal, step (5) is performed; otherwise:
   If the first traction storage battery unit is normal and the electric quantity of the second traction storage battery unit is insufficient, the first switching module K01 and the second switching module K02 are controlled to close, and the third switching module K03 and the fourth switching module K04 are controlled to open, such that the first traction storage battery unit provides energy for the first auxiliary converter and the second auxiliary converter;
   If the electric quantity of the first traction storage battery unit is insufficient and the second traction storage battery unit is normal, the third switching module K03 and the fourth switching module K04 are controlled to close, and the first switching module K01 and the second switching module K02 are controlled to open, such that the second traction storage battery unit provides energy for the first auxiliary converter and the second auxiliary converter;
   If both the electric quantity of the first traction storage battery unit and the electric quantity of the second traction storage battery unit are insufficient, the first switching module K01, the second switching module K02, the third switching module K03 and the fourth switching module K04 are controlled to open to stop the first and second traction storage batteries form providing energy for the first auxiliary converter and the second auxiliary converter, as shown in FIG. 3.
(5) Whether the remaining electric quantity of the second traction storage battery unit is lower than the second set electric quantity is determined, and whether the difference between the remaining electric quantity of the first traction storage battery unit and the remaining electric quantity of the second traction storage battery unit is lower than the third set electric quantity is determined.
   Within each discharge cycle period, when the remaining electric quantity of a traction storage battery unit is low and far lower than that of the other traction storage battery unit, a switching is carried out, such that the discharge electric quantities of the first traction storage battery unit and the second traction storage battery unit are as close as possible within each discharge cycle period to achieve a discharge balance. The switching is carried out only when the remaining electric quantity of the traction storage battery unit is low, which avoids poor stability caused by frequent switching. Because the second traction storage battery unit supplies power to the CVCF auxiliary load with higher power consumption, the remaining electric quantity of the second traction storage battery unit is determined.
(6) If the remaining electric quantity of the second traction storage battery unit is lower than the first set electric quantity, and the difference between the remaining electric quantities of the first traction storage battery unit and the second traction storage battery unit is greater than the second set electric quantity, the second switching module K02 and the fourth switching module K04 are controlled to close, and the first switching module K01 and the third switching module K03 are controlled to open, such that the first traction storage battery unit provides energy for the second auxiliary converter, and the second traction storage battery unit provides energy for the first auxiliary converter.
   The second traction storage battery unit supplies power to the second auxiliary converter with heavier load. Under normal circumstances, the electric quantity of the second traction storage battery unit is drained faster. Therefore, the remaining electric quantity of the second traction storage battery unit is determined, only when the remaining electric quantity of the second traction storage battery unit is low and the difference between the remaining electric quantities of the first traction storage battery unit and the second traction storage battery unit is large, a power supply switching between the first auxiliary converter and the second auxiliary converter is carried out, that is, the switching is carried out only when the second traction storage battery unit has been deeply discharged, thus avoiding repeated switching to reduce stability.
(7) Whether the electric quantity of the first traction storage battery unit and the electric quantity of the second traction storage battery unit are insufficient are determined;
   If both the first traction storage battery unit and the second traction storage battery unit are normal, the second switching module K02 and the fourth switching module K04 are kept closed, and the first switching module K01 and the third switching module K03 are kept open; otherwise:
   If the first traction storage battery unit is normal and the electric quantity of the second traction storage battery unit is insufficient, the first switching module K01 and the second switching module K02 are controlled to close, and the third switching module K03 and the fourth switching module K04 are controlled to open, such that the first traction storage battery unit provides energy for the first auxiliary converter and the second auxiliary converter;
   If the electric quantity of the first traction storage battery unit is insufficient and the second traction storage battery unit is normal, the third switching module K03 and the fourth switching module K04 are controlled to close, and the first switching module K01 and the second switching module K02 are controlled to open, such that the second traction storage battery unit provides energy for the first auxiliary converter and the second auxiliary converter;
   If both the electric quantity of the first traction storage battery unit and the electric quantity of the second traction storage battery unit are insufficient, the first switching module K01, the second switching module K02, the third switching module K03 and the fourth switching module K04 are controlled to open to stop the first and second traction storage batteries from providing energy for the first auxiliary converter and the second auxiliary converter, as shown in FIG. 3.
(8) The second switching module K02 and the fourth switching module K04 are controlled to close, and the first switching module K01 and the third switching module K03 are controlled to open, such that the first traction storage battery unit provides energy for the second auxiliary converter, and the second traction storage battery unit provides energy for the first auxiliary converter.
(9) Whether the electric quantity of the first traction storage battery unit and the electric quantity of the second traction storage battery unit are insufficient are determined; if both the first traction storage battery unit and the second traction storage battery unit are normal, step (10) is performed; otherwise:
   If the first traction storage battery unit is normal and the electric quantity of the second traction storage battery unit is insufficient, the first switching module K01 and the second switching module K02 are controlled to close, and the third switching module K03 and the fourth switching module K04 are controlled to open, such that the first traction storage battery unit provides energy for the first auxiliary converter and the second auxiliary converter;
   If the electric quantity of the first traction storage battery unit is insufficient and the second traction storage battery unit is normal, the third switching module K03 and the fourth switching module K04 are controlled to close, and the first switching module K01 and the second switching module K02 are controlled to open, such that the second traction storage battery unit provides energy for the first auxiliary converter and the second auxiliary converter;
   If both the electric quantity of the first traction storage battery unit and the electric quantity of the second traction storage battery unit are insufficient, the first switching module K01, the second switching module K02, the third switching module K03 and the fourth switching module K04 are controlled to open to stop the first and second traction storage batteries from providing energy for the first auxiliary converter and the second auxiliary converter, as shown in FIG. 3.
(10) Whether the remaining electric quantity of the first traction storage battery unit is lower than the second set electric quantity is determined, and whether the difference between the remaining electric quantity of the second traction storage battery unit and the remaining electric quantity of the first traction storage battery unit is lower than the third set electric quantity is determined.
(11) If the remaining electric quantity of the first traction storage battery unit is lower than the first set electric quantity, and the difference between the remaining electric quantities of the second traction storage battery unit and the first traction storage battery unit is greater than the second set electric quantity, the first switching module K01 and the third switching module K03 are closed, and the second switching module K02 and the fourth switching module K04 are open, such that the first traction storage battery unit provides energy for the first auxiliary converter, and the second traction storage battery unit provides energy for the second auxiliary converter.
   The first traction storage battery unit supplies power to the second auxiliary converter with heavier load. Under normal circumstances, the electric quantity of the first traction storage battery unit is drained faster. Therefore, the remaining electric quantity of the first traction storage battery unit is determined. Only when the remaining electric quantity of the first traction storage battery unit is low and the difference between the remaining electric quantities of the second traction storage battery unit and the first traction storage battery unit is large, a power supply switching between the first auxiliary converter and the second auxiliary converter is carried out, that is, the switching is carried out only when the first traction storage battery unit has been deeply discharged, thus avoiding repeated switching to reduce stability.
   The second traction storage battery unit with more remaining electric quantity is used to supply power to the second auxiliary converter with heavier load, so as to achieve a discharge balance between the first traction storage battery unit and the second traction storage battery unit within the discharge cycle periods.
(12) Whether the electric quantity of the first traction storage battery unit and the electric quantity of the second traction storage battery unit are insufficient or not is determined;
   If both the first traction storage battery unit and the second traction storage battery unit are normal, the first switching module K01 and the third switching module K03 are kept closed, and the second switching module K02 and the fourth switching module K04 are kept open;
   If the first traction storage battery unit is normal and the electric quantity of the second traction storage battery unit is insufficient, the first switching module K01 and the second switching module K02 are controlled to close, and the third switching module K03 and the fourth switching module K04 are controlled to open, such that the first traction storage battery unit provides energy for the first auxiliary converter and the second auxiliary converter;
   If the electric quantity of the first traction storage battery unit is insufficient and the second traction storage battery unit is normal, the third switching module K03 and the fourth switching module K04 are controlled to close, and the first switching module K01 and the second switching module K02 are controlled to open, such that the second traction storage battery unit provides energy for the first auxiliary converter and the second auxiliary converter;
   If both the electric quantity of the first traction storage battery unit and the electric quantity of the second traction storage battery unit are insufficient, the first switching module K01, the second switching module K02, the third switching module K03 and the fourth switching module K04 are controlled to open to stop the first and second traction storage batteries from providing energy for the first auxiliary converter and the second auxiliary converter, as shown in FIG. 3.
   In this embodiment, the second set electric quantity is 40% of the total electric quantity of the first traction storage battery unit or the second traction storage battery unit, and the third set electric quantity is 10% of the total electric quantity of the first traction storage battery unit or the second traction storage battery unit. The first set electric quantity, the second set electric quantity, the third set electric quantity and the fourth set electric quantity can be adjusted according to actual needs.

### Embodiment 2

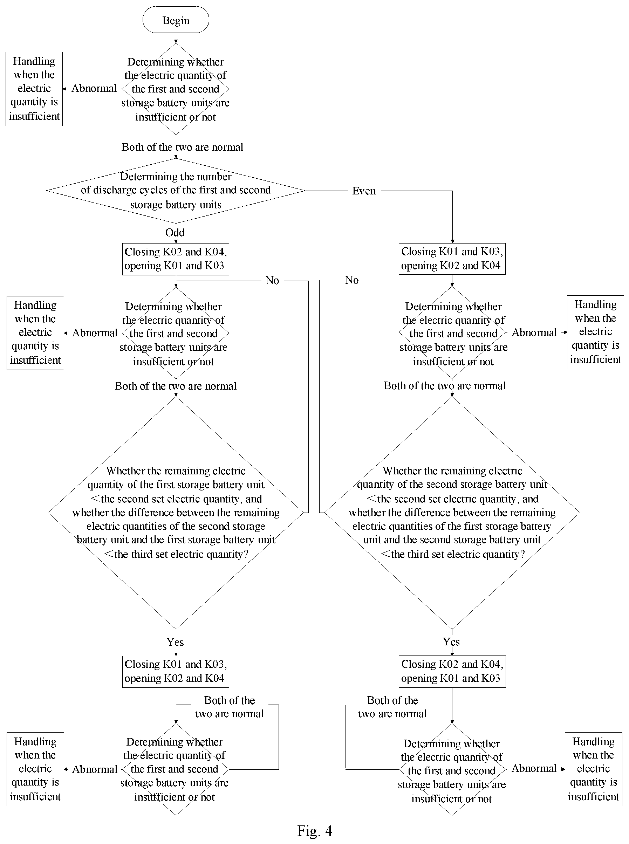

As shown in FIG. 4, the present invention further provides another control method for the discharge balance of power storage batteries, including:
(1) When the discharge balancing circuit is powered on each time, whether electric quantity of the first traction storage battery unit and electric quantity of the second traction storage battery unit are insufficient or not are determined; if both the first traction storage battery unit and the second traction storage battery unit are normal, step (2) is performed; otherwise:
   If the first traction storage battery unit is normal and the electric quantity of the second traction storage battery unit is insufficient, the first switching module K01 and the second switching module K02 are controlled to close, and the third switching module K03 and the fourth switching module K04 are controlled to open, such that the first traction storage battery unit provides energy for the first auxiliary converter and the second auxiliary converter;
   If the electric quantity of the first traction storage battery unit is insufficient and the second traction storage battery unit is normal, the third switching module K03 and the fourth switching module K04 are controlled to close, and the first switching module K01 and the second switching module K02 are controlled to open, such that the second traction storage battery unit provides energy for the first auxiliary converter and the second auxiliary converter;
   If both the electric quantity of the first traction storage battery unit and the electric quantity of the second traction storage battery unit are insufficient, the first switching module K01, the second switching module K02, the third switching module K03 and the fourth switching module K04 are controlled to open to stop the first and second traction storage batteries from providing energy for the first auxiliary converter and the second auxiliary converter, as shown in FIG. 3.
   Whether the electric quantity of the traction storage battery unit is insufficient or not is determined by the condition whether the remaining electric quantity of a traction storage battery unit is lower than a fourth set electric quantity, where
   the fourth set electric quantity < a third set electric quantity < a second set electric quantity < a first set electric quantity, and
   the fourth set electric quantity is a minimum remaining electric quantity. By comparing the remaining electric quantity of the traction storage battery unit with the minimum remaining power, the traction storage batteries are prevented from over-discharging. Even if the electric quantity of one traction storage battery unit is insufficient, the other traction storage battery unit can provide energy for both the VVVF auxiliary load and the CVCF auxiliary load at the same time. Because the first auxiliary converter and the second auxiliary converter provide energy for the VVVF auxiliary load and the CVCF auxiliary load respectively, the possibility that one auxiliary converter provides energy for the VVVF auxiliary load and the CVCF auxiliary load at the same time is avoided, thereby avoiding the problems of loud noise and increased output power caused by the VVVF auxiliary load which runs in a CVCF mode, and effectively improving the endurance of the traction storage batteries.
(2) When the discharge balancing circuit is powered on each time, the number of discharge cycles of the first traction storage battery unit or the second traction storage battery unit is acquired, and whether the discharge cycle is odd or even is determined, and if the number of discharge cycles is odd, step (3) is performed, otherwise, step (8) is performed.
(3) The second switching module K02 and the fourth switching module K04 are controlled to close, and the first switching module K01 and the third switching module K03 are controlled to open, such that the first traction storage battery unit provides energy for the second auxiliary converter, and the second traction storage battery unit provides energy for the first auxiliary converter.
(4) Whether electric quantity of the first traction storage battery unit and electric quantity of the second traction storage battery unit are insufficient or not are determined; if both the first traction storage battery unit and the second traction storage battery unit are normal, step (5) is performed; otherwise:
   If the first traction storage battery unit is normal and the electric quantity of the second traction storage battery unit is insufficient, the first switching module K01 and the second switching module K02 are controlled to close, and the third switching module K03 and the fourth switching module K04 are controlled to open, such that the first traction storage battery unit provides energy for the first auxiliary converter and the second auxiliary converter;
   If the electric quantity of the first traction storage battery unit is insufficient and the second traction storage battery unit is normal, the third switching module K03 and the fourth switching module K04 are controlled to close, and the first switching module K01 and the second switching module K02 are controlled to open, such that the second traction storage battery unit provides energy for the first auxiliary converter and the second auxiliary converter;
   If both the electric quantity of the first traction storage battery unit and the electric quantity of the second traction storage battery unit are insufficient, the first switching module K01, the second switching module K02, the third switching module K03 and the fourth switching module K04 are controlled to open to stop the first and second traction storage batteries from providing energy for the first auxiliary converter and the second auxiliary converter, as shown in FIG. 3.
(5) Whether the remaining electric quantity of the first traction storage battery unit is lower than the second set electric quantity is determined, and whether the difference between the remaining electric quantity of the second traction storage battery unit and the remaining electric quantity of the first traction storage battery unit is lower than the third set electric quantity is determined.
(6) If the remaining electric quantity of the first traction storage battery unit is lower than the first set electric quantity, and the difference between the remaining electric quantities of the second traction storage battery unit and the first traction storage battery unit is greater than the second set electric quantity, the first switching module K01 and the third switching module K03 are closed, and the second switching module K02 and the fourth switching module K04 are open, such that the first traction storage battery unit provides energy for the first auxiliary converter, and the second traction storage battery unit provides energy for the second auxiliary converter.
   The first traction storage battery unit supplies power to the second auxiliary converter with heavier load. Under normal circumstances, the electric quantity of the first traction storage battery unit is drained faster Therefore, the remaining electric quantity of the first traction storage battery unit is determined. Only when the remaining electric quantity of the first traction storage battery unit is low and the difference between the remaining electric quantities of the second traction storage battery unit and the first traction storage battery unit is large, a power supply switching between the first auxiliary converter and the second auxiliary converter is carried out, that is, the switching is carried out only when the first traction storage battery unit has been deeply discharged, thus avoiding repeated switching to reduce stability.
   The second traction storage battery unit with more remaining electric quantity supplies power to the second auxiliary converter with heavier load, so as to achieve a discharge balance between the first traction storage battery unit and the second traction storage battery unit within discharge cycle periods.
(7) Whether the electric quantity of the first traction storage battery unit and the electric quantity of the second traction storage battery unit are insufficient or not are determined;
   If both the first traction storage battery unit and the second traction storage battery unit are normal, the first switching module K01 and the third switching module K03 are kept closed, and the second switching module K02 and the fourth switching module K04 are kept open;
   If the first traction storage battery unit is normal and the electric quantity of the second traction storage battery unit is insufficient, the first switching module K01 and the second switching module K02 are controlled to close, and the third switching module K03 and the fourth switching module K04 are controlled to open, such that the first traction storage battery unit provides energy for the first auxiliary converter and the second auxiliary converter;
   If the electric quantity of the first traction storage battery unit is insufficient and the second traction storage battery unit is normal, the third switching module K03 and the fourth switching module K04 are controlled to close, and the first switching module K01 and the second switching module K02 are controlled to open, such that the second traction storage battery unit provides energy for the first auxiliary converter and the second auxiliary converter;
   If both the electric quantity of the first traction storage battery unit and the electric quantity of the second traction storage battery unit are insufficient, the first switching module K01, the second switching module K02, the third switching module K03 and the fourth switching module K04 are controlled to open to stop the first and second traction storage batteries from providing energy for the first auxiliary converter and the second auxiliary converter, as shown in FIG. 3.
(8) The first switching module K01 and the third switching module K03 are controlled to close, and the second switching module K02 and the fourth switching module K04 are controlled to open, such that the first traction storage battery unit provides energy for the first auxiliary converter, and the second traction storage battery unit provides energy for the second auxiliary converter.
   Within the current discharge cycle period (the number of discharge cycles is even), the first traction storage battery unit provides energy for the first auxiliary converter, and the second traction storage battery unit provides energy for the second auxiliary converter; and within the next discharge cycle period (the number of discharge cycles is odd), the first traction storage battery unit provides energy for the second auxiliary converter, and the second traction storage battery unit provides energy for the first auxiliary converter, such that the discharge amounts of the first traction storage battery unit and the second traction storage battery unit are balanced within the two discharge cycle periods.
(9) Whether the electric quantity of the first traction storage battery unit and the electric quantity of the second traction storage battery unit are insufficient are determined; if both the first traction storage battery unit and the second traction storage battery unit are normal, step (10) is performed; otherwise:
   If the first traction storage battery unit is normal and the electric quantity of the second traction storage battery unit is insufficient, the first switching module K01 and the second switching module K02 are controlled to close, and the third switching module K03 and the fourth switching module K04 are controlled to open, such that the first traction storage battery unit provides energy for the first auxiliary converter and the second auxiliary converter;
   If the electric quantity of the first traction storage battery unit is insufficient and the second traction storage battery unit is normal, the third switching module K03 and the fourth switching module K04 are controlled to close, and the first switching module K01 and the second switching module K02 are controlled to open, such that the second traction storage battery unit provides energy for the first auxiliary converter and the second auxiliary converter;
   If both the electric quantity of the first traction storage battery unit and the electric quantity of the second traction storage battery unit are insufficient, the first switching module K01, the second switching module K02, the third switching module K03 and the fourth switching module K04 are controlled to open to stop the first and second traction storage batteries from providing energy for the first auxiliary converter and the second auxiliary converter, as shown in FIG. 3.
(10) Whether the remaining electric quantity of the second traction storage battery unit is lower than the second set electric quantity is determined, and whether the difference between the remaining electric quantity of the first traction storage battery unit and the remaining electric quantity of the second traction storage battery unit is lower than the third set electric quantity is determined.
   Within each discharge cycle period, when the remaining electric quantity of a traction storage battery unit is low and far lower than that of the other traction storage battery unit, a switching is carried out, such that the discharge electric quantities of the first traction storage battery unit and the second traction storage battery unit are as close as possible within each discharge cycle period to achieve the discharge balance. The switching is carried out only when the remaining electric quantity of the traction storage battery unit is low, which avoids poor stability caused by frequent switching. Because the second traction storage battery unit supplies power to the CVCF auxiliary load with higher power consumption, the remaining electric quantity of the second traction storage battery unit is determined.
(11) If the remaining electric quantity of the second traction storage battery unit is lower than the first set electric quantity and the difference between the remaining electric quantities of the first traction storage battery unit and the second traction storage battery unit is greater than the second set electric quantity, the second switching module K02 and the fourth switching module K04 are controlled to close, and the first switching module K01 and the third switching module K03 are controlled to open, such that the first traction storage battery unit provides energy for the second auxiliary converter, and the second traction storage battery unit provides energy for the first auxiliary converter.
   The second traction storage battery unit supplies power to the second auxiliary converter with heavier load. Under normal circumstances, the electric quantity of the second traction storage battery unit is drained faster. Therefore, the remaining electric quantity of the second traction storage battery unit is determined. Only when the remaining electric quantity of the second traction storage battery unit is low and the difference between the remaining electric quantities of the first traction storage battery unit and the second traction storage battery unit is large, a power supply switching between the first auxiliary converter and the second auxiliary converter is carried out, that is, the switching is carried out only when the second traction storage battery unit has been deeply discharged, thus avoiding repeated switching to reduce stability.
(12) Whether the electric quantity of the first traction storage battery unit and the electric quantity of the second traction storage battery unit are insufficient are determined;
   If both the first traction storage battery unit and the second traction storage battery unit are normal, the second switching module K02 and the fourth switching module K04 are kept closed, and the first switching module K01 and the third switching module K03 are kept open; otherwise:
   If the first traction storage battery unit is normal and the electric quantity of the second traction storage battery unit is insufficient, the first switching module K01 and the second switching module K02 are controlled to close, and the third switching module K03 and the fourth switching module K04 are controlled to open, such that the first traction storage battery unit provides energy for the first auxiliary converter and the second auxiliary converter;
   If the electric quantity of the first traction storage battery unit is insufficient and the second traction storage battery unit is normal, the third switching module K03 and the fourth switching module K04 are controlled to close, and the first switching module K01 and the second switching module K02 are controlled to open, such that the second traction storage battery unit provides energy for the first auxiliary converter and the second auxiliary converter;
   If both the electric quantity of the first traction storage battery unit and the electric quantity of the second traction storage battery unit are insufficient, the first switching module K01, the second switching module K02, the third switching module K03 and the fourth switching module K04 are controlled to open to stop the first and second traction storage batteries from providing energy for the first auxiliary converter and the second auxiliary converter, as shown in FIG. 3.

In this embodiment, the second set electric quantity is 40% of the total electric quantity of the first traction storage battery unit or the second traction storage battery unit, and the third set electric quantity is 10% of the total electric quantity of the first traction storage battery unit or the second traction storage battery unit. The first set electric quantity, the second set electric quantity, the third set electric quantity and the fourth set electric quantity can be adjusted according to actual needs.

The present invention relates to a control method for a traction storage battery discharge balancing circuit, which automatically adjusts the default configuration of auxiliary loads according to the number of discharge cycles of a storage battery unit, such that the discharge amounts that the storage battery unit discharges to the first auxiliary converter and the second auxiliary converter are basically equal within two discharge cycle periods. Similarly, the discharge amounts that the other storage battery unit discharges to the first auxiliary converter and the second auxiliary converter are also substantially equal within the two discharge cycle periods. Therefore, the discharge amounts of the two storage battery units in the whole service life cycle are basically equal, which can ensure that their service lives are basically the same.

Only when storage battery with heavier load has a low electric quantity and the electric quantity of the storage battery unit is lower than that of the other storage battery unit by a certain value (the difference is the third set electric quantity), the configuration of the auxiliary loads is automatically switched, such that the former storage battery with heavier load automatically supplies power to the auxiliary converter with lighter load, the former storage battery with lighter load automatically supplies power to the auxiliary converter with heavier load, the discharge amounts of the two storage battery units are relatively balanced during deep discharge. The remaining electricity quantity of the storage batteries can be fully used to improve the endurance of a locomotive, and repeated configuration of the auxiliary converters can be avoided when the electricity quantity of the storage batteries are high, thus improving the stability of locomotive operation.

The contactors (K01/K02/K03/K04) for switching the auxiliary loads are arranged on the branches of the traction storage battery pack and the input sides of the auxiliary converters, and the switching of the contactors does not affect the power supply of the traction storage batteries to the traction converters, so the configuration or switching process of the contactors does not affect the normal running of the locomotive.

All described above are the specific embodiments of the present invention only, but the protection scope of the present invention is not limited thereto. Any skilled person who is familiar with this art could readily conceive of variations or modifications within the disclosed technical scope of the present invention, and these variations or modifications shall fall within the protection scope of the present invention.

## Claims

1. A discharge balancing circuit for power storage batteries of a rail transit vehicle, comprising a first traction storage battery unit, a first traction converter connected to the first traction storage battery unit, a second traction storage battery unit, a second traction converter connected to the second traction storage battery unit, a first auxiliary converter, a VVVF auxiliary load connected to the first auxiliary converter, a second auxiliary converter, and a CVCF auxiliary load connected to the second auxiliary converter, wherein
the first traction storage battery unit is connected to the first auxiliary converter by a first switching module, and the first traction storage battery unit is connected to the second auxiliary inverter by a second switching module; the second traction storage battery unit is connected to the second auxiliary inverter by a third switching module, and the second traction storage battery unit is connected to the first auxiliary inverter by a fourth switching module.

2. The discharge balancing circuit for power storage batteries of the rail transit vehicle according to claim 1, wherein the first switching module, the second switching module, the third switching module and the fourth switching module are all contactors.

3. A rail transit vehicle, comprising the discharge balancing circuit for power storage batteries according to claim 1 or 2,
wherein the closing and opening of the first switching module, the second switching module, the third switching module and the fourth switching module of the power storage battery discharge balancing circuit are controlled by a control system; and preferably, the closing and opening of the first switching module, the second switching module, the third switching module and the fourth switching module are controlled by a TCMS system.

4. A control method for the discharge balance of power storage batteries of the rail transit vehicle according to claim 3, comprising:
when the discharge balancing circuit is powered on each time, acquiring a number of discharge cycles of the first traction storage battery unit or the second traction storage battery unit, and determining whether the number of discharge cycles is odd or even;
if the number of discharge cycles is odd, controlling the first switching module and the third switching module to close and controlling the second switching module and the fourth switching module to open; or, controlling the second switching module and the fourth switching module to close and controlling the first switching module and the third switching module to open; and
if the number of discharge cycles is even, controlling the second switching module and the fourth switching module to close and controlling the first switching module and the third switching module to open; or, controlling the first switching module and the third switching module to close and controlling the second switching module and the fourth switching module to open;
wherein each time the accumulated discharge amount of the first traction storage battery unit or the second traction storage battery unit is increased by a first set electric quantity, increasing the number of discharge cycles by 1.

5. The control method according to claim 4, wherein after the first switching module and the third switching module are closed and the second switching module and the fourth switching module are open, the control method further comprises:
determining whether the remaining electric quantity of the second traction storage battery unit is lower than a second set electric quantity, and determining whether the difference between the remaining electric quantity of the first traction storage battery unit and the remaining electric quantity of the second traction storage battery unit is lower than a third set electric quantity; and
if the remaining electric quantity of the second traction storage battery unit is lower than the second set electric quantity and the difference between the remaining electric quantity of the first traction storage battery unit and the remaining electric quantity of the second traction storage battery unit is greater than the third set electric quantity, controlling the second switching module and the fourth switching module to close, and controlling the first switching module and the third switching module to open; otherwise, keeping the first switching module and the third switching module closed, and keeping the second switching module and the fourth switching module open.

6. The control method according to claim 5, wherein the control method further comprises a step of determining whether the electric quantity of the traction storage battery unit is insufficient or not, said step being carried out:
after the first switching module and the third switching module are closed and the second switching module and the fourth switching module are open, and
before determining whether the remaining electric quantity of the second traction storage battery unit is lower than the second set electric quantity, and
before determining whether the difference between the remaining electric quantity of the first traction storage battery unit and the remaining electric quantity of the second traction storage battery unit is lower than the third set electric quantity,
wherein said step of determining whether the electric quantity of the traction storage battery unit is insufficient or not comprises:
determining whether the electric quantity of the first traction storage battery unit and the electric quantity of the second traction storage battery unit are insufficient;
if both the first traction storage battery unit and the second traction storage battery unit are normal, determining whether the remaining electric quantity of the second traction storage battery unit is lower than the second set electric quantity, and determining whether the difference between the remaining electric quantity of the first traction storage battery unit and the remaining electric quantity of the second traction storage battery unit is lower than the third set electric quantity; or
if the first traction storage battery unit is normal and the electric quantity of the second traction storage battery unit is insufficient, controlling the first switching module and the second switching module to close, and controlling the third switching module and the fourth switching module to open; or
if the electric quantity of the first traction storage battery unit is insufficient and the second traction storage battery unit is normal, controlling the third switching module and the fourth switching module to close, and controlling the first switching module and the second switching module to open; or
if both the electric quantity of the first traction storage battery unit and the electric quantity of the second traction storage battery unit are insufficient, controlling the first switching module, the second switching module, the third switching module and the fourth switching module to open.

7. The control method according to any one of claims 4 to 6, wherein after the second switching module and the fourth switching module are closed and the first switching module and the third switching module are open, the control method further comprises:
determining whether the remaining electric quantity of the first traction storage battery unit is lower than the second set electric quantity, and determining whether the difference between the remaining electric quantity of the second traction storage battery unit and the remaining electric quantity of the first traction storage battery unit is lower than the third set electric quantity; and
if the remaining electric quantity of the first traction storage battery unit is lower than the second set electric quantity and the difference between the remaining electric quantity of the second traction storage battery unit and the remaining electric quantity of the first traction storage battery unit is greater than the third set electric quantity, controlling the first switching module and the third switching module to close, and controlling the second switching module and the fourth switching module to open; otherwise, keeping the second switching module and the fourth switching module closed, and keeping the first switching module and the third switching module open.

8. The control method according to claim 7, wherein the control method further comprises a step of determining whether the electric quantity of the traction storage battery unit is insufficient or not, said step being carried out
after the second switching module and the fourth switching module are closed and the first switching module and the third switching module are open, and
before determining whether the remaining electric quantity of the first traction storage battery unit is lower than the second set electric quantity, and
before determining whether the difference between the remaining electric quantity of the second traction storage battery unit and the remaining electric quantity of the first traction storage battery unit is lower than the third set electric quantity,
wherein said step of determining whether the electric quantity of the traction storage battery unit is insufficient or not comprises:
determining whether the electric quantity of the first traction storage battery unit and the electric quantity of the second traction storage battery unit are insufficient;
if both the first traction storage battery unit and the second traction storage battery unit are normal, determining whether the remaining electric quantity of the first traction storage battery unit is lower than the second set electric quantity, and determining whether the difference between the remaining electric quantity of the second traction storage battery unit and the remaining electric quantity of the first traction storage battery unit is lower than the third set electric quantity; or
if the first traction storage battery unit is normal and the electric quantity of the second traction storage battery unit is insufficient, controlling the first switching module and the second switching module to close, and controlling the third switching module and the fourth switching module to open; or
if the electric quantity of the first traction storage battery unit is insufficient and the second traction storage battery unit is normal, controlling the third switching module and the fourth switching module to close, and controlling the first switching module and the second switching module to open; or
if both the electric quantity of the first traction storage battery unit and the electric quantity of the second traction storage battery unit are insufficient, controlling the first switching module, the second switching module, the third switching module and the fourth switching module to open.

9. The control method according to any one of claims 4 to 8, wherein before acquiring the number of discharge cycles of the first traction storage battery unit or the second traction storage battery unit, and before determining whether the number of discharge cycles is odd or even, the control method further comprises a step of determining whether the electric quantity of the traction storage battery unit is insufficient or not, comprising:
determining whether the electric quantity of the first traction storage battery unit and the electric quantity of the second traction storage battery unit are insufficient;
if both the first traction storage battery unit and the second traction storage battery unit are normal, acquiring the number of discharge cycles of the first traction storage battery unit or the second traction storage battery unit, and determining whether the number of discharge cycles is odd or even; or
if the first traction storage battery unit is normal and the electric quantity of the second traction storage battery unit is insufficient, controlling the first switching module and the second switching module to close, and controlling the third switching module and the fourth switching module to open; or
if the electric quantity of the first traction storage battery unit is insufficient and the second traction storage battery unit is normal, controlling the third switching module and the fourth switching module to close, and controlling the first switching module and the second switching module to open; or
if both the electric quantity of the first traction storage battery unit and the electric quantity of the second traction storage battery unit are insufficient, controlling the first switching module, the second switching module, the third switching module and the fourth switching module to open.

10. The control method according to any one of claims 5 to 8, wherein the first set electric quantity is a total electric quantity of the first traction storage battery unit or the second traction storage battery unit; the second set electric quantity and the third set electric quantity satisfy the following relation: when a remaining electric quantity of any traction storage battery unit is equal to the second set electric quantity, the time for said traction storage battery unit to simultaneously discharge to one traction converter and the VVVF auxiliary load until its electric quantity reaches zero or almost zero, is equal to the time for the other traction storage battery unit to simultaneously discharge to the other traction converter and the CVCF auxiliary load until its electric quantity reaches zero or almost zero, when a remaining electric quantity of the other traction storage battery unit is equal to the sum of the second set electric quantity and the third set electric quantity, and the value of the second set electric quantity is minimum.
